(19) Europäisches Patentamt
European Patent Office
Office européen des brevets

(11) EP 0 538 621 B1

# (12) EUROPÄISCHE PATENTSCHRIFT

(45) Veröffentlichungstag und Bekanntmachung des Hinweises auf die Patenterteilung:
**08.05.1996 Patentblatt 1996/19**

(51) Int. Cl.[6]: **C07F 7/12**

(21) Anmeldenummer: **92115782.2**

(22) Anmeldetag: **16.09.1992**

(54) **2-Methyl-3-chlorpropyl-cyclohexyldichlorsilan und Verfahren zu dessen Herstellung**

2-Methyl-3-chloropropyl-cyclohexyldichlorosilane and process for its preparation

2-Méthyl-3-chloropropyl-cyclohéxyldichlorosilane et procédé de préparation dudit composé

(84) Benannte Vertragsstaaten:
**DE FR GB IT**

(30) Priorität: **23.10.1991 DE 4134977**

(43) Veröffentlichungstag der Anmeldung:
**28.04.1993 Patentblatt 1993/17**

(73) Patentinhaber: **HÜLS AKTIENGESELLSCHAFT**
**D-45764 Marl (DE)**

(72) Erfinder:
- **Lillig, Bernhard, Dr.**
  **W-7888 Rheinfelden (DE)**
- **Seiler, Claus-Dietrich, Dr.**
  **W-7888 Rheinfelden (DE)**

(56) Entgegenhaltungen:
**US-A- 2 951 862**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 538 621 B1

Printed by Rank Xerox (UK) Business Services
2.11.3/3.4

## Beschreibung

Gegenstand der vorliegenden Erfindung sind die Verbindung 2-Methyl-3-chlorpropyl-cyclohexyldichlorsilan und ein Verfahren zur Herstellung dieser Verbindung.

Es ist bekannt, für die Modifizierung von Siliconen difunktionelle Diorganosilanverbindungen einzusetzen. Hierbei haben in jüngerer Zeit solche Verbindungen besonderes Interesse gefunden, welche im Molekül als Organokomponente neben einem nicht-reaktiven Rest, z. B. einer Alkyl- oder Cycloalkylgruppe, einen Rest besitzen, der ein Schlüsselatom, vorzugsweise ein Chloratom, zur Einführung funktioneller Gruppen aufweist. Die Einführung der gewünschten funktionellen Gruppen kann dabei nach Eingliederung des Moleküls in Siloxanketten oder aber nach Veresterung des siliciumfunktionellen Restes der Ausgangsverbindung erfolgen.

Es bestand das Problem, neue difunktionelle Diorganosilanverbindungen zu finden, welche zur Modifizierung von Siliconen eingesetzt werden können.

Das Problem wurde durch Auffinden der Verbindung 2-Methyl-3-chlorpropyl-cyclohexyldichlorsilan und eines Verfahrens zur Herstellung dieser Verbindung gelöst.

Bei der Herstellung der erfindungsgemäßen Verbindung wird das Mengenverhältnis der beiden Reaktionspartner vorzugsweise so gewählt, daß man einen molaren Überschuß an ungesättigter Verbindung pro Grammatom des reagierenden Wasserstoffs des Hydrosilans anwendet.

Demzufolge werden pro Mol des Hydrogensilans etwa 1,2 bis 1,4 Mol der olefinischen Verbindung eingesetzt.

Die Umsetzung der Reaktanten erfolgt in Gegenwart von Platin oder Platinverbindungen als Katalysatoren. Metallisches Platin wird in Form von Platinschwamm, vorzugsweise auf Aktivkohle abgeschieden, eingesetzt; aus der Reihe der Platinverbindungen seien als einfache Platinverbindung

$$H_2PtCl_6 \cdot 6\ H_2O$$

und als komplexe Platinverbindung das Mesityl-Platindichlorid genannt.

Bei Verwendung von 2-Methyl-3-chlorpropen als olefinische Komponente entsteht im Verlauf der Reaktion neben 2-Methyl-3-chlorpropyl-cyclohexyldichlorsilan auch Cyclohexyltrichlorsilan, das aus dem Beta-Zerfall der in begrenztem Umfang bei dieser Umsetzung sich bildenden Verbindung 1,1-Dimethyl-2-chlorethyl-cyclohexyldichlorsilan resultiert. Die Reaktionsprodukte unterscheiden sich in ihren Siedepunkten, so daß eine destillative Abtrennung nach bekannten Verfahren möglich ist.

Bei der Verwendung von Cyclohexen als olefinische Komponente tritt eine Nebenreaktion dieser Art nicht auf.

Die Umsetzungen der Hydrogensilane mit den jeweiligen Olefinen verlaufen exotherm und können in einem weiten Temperaturbereich durchgeführt werden. Die Reaktionstemperatur soll möglichst 80 °C nicht unter- und 180 °C nicht überschreiten.

In Abhängigkeit vom gewählten Syntheseweg wird die Umsetzung der Reaktanten bei Normaldruck oder erhöhtem Druck vorgenommen. So empfiehlt es sich, zur Vermeidung längerer Reaktionszeiten bei der Herstellung von 2-Methyl-3-chlorpropyl-cyclohexyldichlorsilan dann unter erhöhtem Druck zu arbeiten, wenn die Umsetzung so geführt wird, daß man die olefinische Komponente vorlegt und die silanische Komponente je nach Reaktionsfortschritt zudosiert. Bei einer Reaktionsführung, in welcher die silanische Komponente vorgelegt und das Olefin zudosiert wird, kann man die Umsetzung bei Normaldruck und Temperaturen unterhalb des Siedepunktes des Hydrogensilans vornehmen.

Die Erfindung wird nachfolgend anhand der Beispiele erläutert.

<u>Beispiel 1</u>

Aus Stahl wird eine Apparatur folgender Konstruktion aufgebaut:
Von einer Stahlblase (ca. 12 Liter Inhalt, beheizbar mit Dampf über Einsatzheizer) führt eine Stahlleitung in den Unterteil eines über der Blase befindlichen Kühlers (Oberfläche ca. 0,5 $m^2$). Aus dem Unterteil des Kühlers führt eine Leitung (Länge ca. 2 m) abwärts über ein gebogenes Rohr zurück in den Unterteil der Blase. Die Blase selbst ist mit einem Manometer und einer Temperaturanzeige ausgestattet. Der Kühler wird mit Wasser als Kühlmittel betrieben, das zu Beginn des Versuches noch abgestellt ist. In die evakuierte Blase werden 1 950 g (21,5 Mol) 2-Methyl-3-chlorpropen und 22 ml Katalysatorlösung (1 g $H_2PtCl_6 \cdot 6\ H_2O$, gelöst in 23 ml Aceton) vorgelegt. Durch Aufgabe von Dampf auf den Einsatzheizer wird das System auf eine Temperatur von ca. 110 °C gebracht. Es stellt sich ein Anlagendruck von 0,25 MPa ein. Durch Öffnen der Wasserzufuhr zum Röhrenkühler oberhalb der Blase wird für Kondensation der 2-Methyl-3-chlorpropen-Dämpfe gesorgt. Im Verlauf von zwei Stunden werden 4 600 g (25,1 Mol) Cyclohexyldichlorsilan in das System eingeführt. Der Beginn der Reaktion wird durch einen Anstieg der Blasentemperatur signalisiert. Drei Stunden nach Beendigung der Hydrogensilan-Zugabe wird eine Restmenge von 1 300 g (14,4 Mol) 2-Methyl-3-chlorpropen zusammen mit 15 ml Katalysatorlösung im Verlauf von 45 Minuten dem Reaktionsgemisch in der Blase zugeführt. Nach einer Gesamtreaktionszeit von 13 Stunden wird die Umsetzung abgebrochen, das Reaktionsgemisch abgelassen und destillativ aufgearbeitet.

Es werden 5 228 g (19,1 Mol) 2-Methyl-3-chlorpropylcyclohexyldichlorsilan erhalten, was einer Ausbeute von 76 %, bezogen auf den Einsatz von Cyclohexyldichlorsilan, entspricht.

Die Struktur der neuen Verbindung wurde durch Elementar- und und GC/MS-Analyse sowie NMR-Spektren identifiziert.

| | | |
|---|---|---|
| Molekulargewicht: | theoretisch | 273,71 g/mol |
| | gefunden | 277,3 g/mol |
| Dichte ($d_4^{20}$): | | 1,154 g/cm3 |
| Dynam. Viskosität: | | 12,5 mPa · s |
| Siedepunkt (0,1 hPa): | | 121 °C |

| Elementaranalyse: | theoretisch | gefunden |
|---|---|---|
| C | 43,9 % | 43,7 % |
| H | 6,9 % | 7,0 % |
| Si | 10,2 % | 10,1 % |
| Cl | 39,0 % | 39,2 %. |

Das vorliegende Produkt besitzt demzufolge die Formel

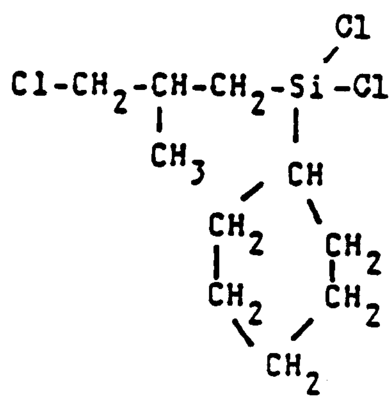

Beispiel 2

In einem mit Tropftrichter, Rückflußkühler, Rührer und Temperaturregler ausgestatteten Vierhalskolben werden 3 831 g (20 Mol) 2-Methyl-3-chlorpropyldichlorsilan zusammen mit 12 ml einer Katalysatorlösung entsprechend Beispiel 1 vorgelegt. Unter Rühren wird der Kolbeninhalt auf ca. 110 °C erwärmt und diese Temperatur bis zum Ende der Umsetzung aufrechterhalten. Im Verlauf von sechs Stunden werden 1 807 g (22 Mol) Cyclohexen aus dem Tropftrichter zugegeben. Nach Ablauf von drei Stunden werden nochmals 12 ml Katalysatorlösuug nachdosiert. Die Gesamtreaktionszeit beträgt 19 Stunden. Danach wird das Reaktionsgemisch destillativ aufgearbeitet.

Es werden 5 200 g (19 Mol) 2-Methyl-3-chlorpropyl-cyclohexyldichlorsilan erhalten, entsprechend einer Ausbeute von 95 %, bezogen auf den Einsatz von 2-Methyl-3-chlorpropyldichlorsilan.

**Patentansprüche**

1. 2-Methyl-3-chlorpropyl-cyclohexyldichlorsilan.

2. Verfahren zur Herstellung von 2-Methyl-3-chlorpropylcyclohexyldichlorsilan, dadurch gekennzeichnet, daß man in an sich bekannter Weise Cyclohexyldichlorsilan mit 2-Methyl-3-chlorpropen oder 2-Methyl-3-chlorpropyldichlorsilan mit Cyclohexen in Gegenwart von Platin oder Platinverbindungen umsetzt.

3. Verfahren nach Anspruch 2, dadurch gekennzeichnet, daß die Reaktionstemperatur 80 bis 180 °C beträgt.

**Claims**

1. 2-methyl-3-chloropropylcyclohexyldichlorosilane.

2. Process for preparing 2-methyl-3-chloropropylcyclohexyldichlorosilane, characterized in that, in a manner known per se, cyclohexyldichlorosilane is reacted with 2-methyl-3-chloropropene or 2-methyl-3-chloropropyldichlorosilane is reacted with cyclohexene in the presence of platinum or platinum compounds.

3. Process according to Claim 2, characterized in that the reaction temperature is 80 to 180°C.

**Revendications**

1. 2-méthyl-3-chloropropyl-cyclohexyldichlorosilane.

2. Procédé de fabrication de 2-méthyl-3-chloropropyl-cyclohexyldichlorosilane, caractérisé en ce qu'on fait réagir de manière connue du cyclohexyldichlorosilane avec du 2-méthyl-3-chloropropène ou du 2-méthyl-3-chloropropyldichlorosilane avec du cyclohexène en présence de platine ou de composés du platine.

3. Procédé selon la revendication 2, caractérisé en ce que la température de réaction est comprise entre 80 et 180°C.